Europäisches Patentamt

European Patent Office

Office européen des brevets

(11) Publication number: **0 021 326**
A1

# EUROPEAN PATENT APPLICATION

(21) Application number: 80103373.9

(22) Date of filing: 18.06.80

(51) Int. Cl.³: **G 11 B 5/55**, G 11 B 21/08

(30) Priority: 28.06.79 US 52739
28.06.79 US 52738

(43) Date of publication of application: 07.01.81
Bulletin 81/1

(84) Designated Contracting States: **AT BE CH DE FR GB IT LI LU NL SE**

(71) Applicant: **BASF Aktiengesellschaft, Carl-Bosch-Strasse 38, D-6700 Ludwigshafen (DE)**

(72) Inventor: **Bejerano, Abraham, 976 Denver Drive, Costa Mesa, California 92626 (US)**
Inventor: **Bennett, Georg J., 12591 Barbara Ave., Garden Grove, California 92 641 (US)**
Inventor: **Arns, Harold E., 2060 Carbon Canyon, Chino, California 91710 (US)**

(54) **Transducer positioning apparatus.**

(57) Apparatus for positioning a transducer head (13) in a prescribed relationship relative to a selected track of a plurality of parallel tracks on a recording medium (11). The apparatus includes a rotatable member such as a lead screw (27) that is threadedly coupled to a bracket (21) for supporting the transducer head (13), whereby a controlled rotation of the lead screw (27) functions to move the transducer head (13) along the surface of the recording medium (11), to the prescribed position. Rotation of the lead screw (27) is controlled by a geneva mechanism that includes a geneva wheel (29) coupled to the lead screw (27) and a geneva driver (31) driven by a reversible d-c motor. Each revolution of the geneva driver (31) rotates the geneva wheel (29), and thus the lead screw (27), through a prescribed angle, such that the transducer head (13) is moved along the recording medium (11) by a prescribed amount, such as one track spacing.

O. Z. 0050/033991
033992

0021326

Transducer positioning apparatus

Background of the invention

This invention relates generally to transducer positioning apparatus and, more particularly, to improvements in apparatus for positioning a transducer head in a prescribed relationship relative to a selected track on a recording medium such as a magnetic tape.

An example of a transducer positioning apparatus of this particular type is disclosed in U.S. Patent No. 4,144,549. As described in that patent, such apparatus includes a frame having a guide to direct the tape past the transducer head, and a cam mounted for rotation on the frame and having a graduated series of planar steps formed in its upper surface. The transducer head is carried by a platform assembly having a bearing post that is maintained in continuous contact with the steps of the cam, whereby controlled rotation of the cam causes the head to move upwardly or downwardly to prescribed positions corresponding to the positions of recording tracks on the magnetic tape.

One drawback to the aforedescribed prior art device arises when it is adapted for use with a recording tape having a relatively large number of tracks arranged in a very closely-spaced relationship. In such situations the cam must be formed with extreme accuracy and precision, so as a consequence, the manufacturing costs associated with this apparatus are relatively high. Additionally, since each of the graduated, planar steps of the rotatable cam corresponds to a separate track on the tape, the steps must be made exceedingly small. For example, when recording tapes having 72 tracks are used, each step of the cam can subtend, at most, only 5 degrees of arc. As a consequence, it can

Sometimes be difficult to index the transducer head by a prescribed number of tracks, without experiencing an overshoot onto the next successive track.

Another transducer positioning apparatus of this particular type is disclosed in U.S. Patent No. 4,041,539. The apparatus disclosed in that patent includes a geneva mechanism, in combination with a rather elaborate gearing mechanism, a geneva mechanism rotating a cam follower means indirectly via a rotatable cylindrical cam that is directly indexed by the geneva mechanism. Although the apparatus is likely effective in incrementing the cam through a precise angle, it is nevertheless subject to high manufacturing costs, especially when adapted for use with a recording tape having a relatively large number of closely-spaced tracks.

It will be appreciated from the foregoing that there is still a need for apparatus that can accurately position a transducer head in a prescribed relationship relative to a selected track on a recording medium, without involving undue manufacturing costs, and without involving the possibility of overshooting the selected track when indexing the transducer head from one track to another. The present invention fulfills this need.

Brief description of the invention

The present invention is embodied in an improved transducer positioning apparatus for controllably positioning a transducer head in a prescribed relationship relative to a selected track on a recording medium. In accordance with the invention, the apparatus includes a rotatable member such as a lead screw that is mounted for rotation on the frame of the apparatus and that is threadedly coupled to means for supporting the transducer head relative to the

recording medium, along with means for rotating the lead screw in a prescribed fashion, to controllably move the support means, and thereby position the transducer head in the prescribed relationship relative to the selected track. As a result, the need for a precisely machined cam is avoided, and the difficulty associated with having relatively small cam steps is avoided.

More particularly, a transducer positioning apparatus constructed in accordance with the present invention is especially adaptable for use in a video tape recorder of the longitudinal type, wherein the recording tracks on the magnetic tape are arranged in a spaced, parallel relationship across the width of the tape. The apparatus includes a frame that has means for guiding the magnetic tape along a horizontal path past the transducer head, and the lead screw is mounted on the frame for rotation about a vertical axis, whereby rotation of the lead screw functions to move the transducer head upwardly or downwardly along the surface of the magnetic tape, from one track to another. It will be understood that references made herein to directional orientations of the elements of the apparatus are made solely for the purpose of describing their relative positions, and the invention is not, of course, limited to a particular orientation.

In accordance with another aspect of the present invention, the lead screw is controllably rotated or indexed by a geneva mechanism that includes a geneva wheel coupled to the lead screw and a geneva driver rotatably driven by reversible motor means. Each revolution of the geneva driver functions to rotate the geneva wheel by a prescribed angle and thereby index the transducer head by a prescribed amount, such as one track spacing.

In still another aspect of the present invention, the apparatus further includes fine adjustment means for controllably moving the lead screw in a vertical or axial direction, to effect a fine adjustment of the position of the transducer head relative to the selected track. More specifically, the fine adjustment means includes a rotatable member that is threadedly received in a threaded bore formed in the apparatus frame, such rotatable member being coupled to the lead screw in such fashion that the lead screw can be rotated with respect to it but is prevented from movement axially with respect to it. As a result, a controlled rotation of the rotatable member with respect to the frame effects a corresponding movement axially with respect to the frame, thereby correspondingly moving the lead screw axially and effecting a fine positioning of the transducer head relative to the selected track.

The rotatable member can advantageously comprise a thrust bushing in which the lead screw is journaled and which is externally threaded for threaded engagement with the apparatus frame. Relative axial movement between the lead screw and the bushing can be prevented, for example, by spring-biasing a shoulder formed in the lead screw into abutment with one end of the bushing.

The bushing can include a plurality of gear teeth formed on a peripheral surface and it can be rotated relative to the frame by a pinion gear engagable with the teeth. Thus, a controlled, manual rotation of the pinion gear effects a corresponding rotation of the bushing in the threaded bore of the frame, thereby moving the bushing, and thus the lead screw, along a vertical axis, to adjust the relative position of the transducer head. Additionally, the fine adjustment means includes a tab projecting upwardly from an off-center location on the thrust bushing, along with cam

means selectively engagable with the tab to re-position the rotatable member to a prescribed nominal position. This re-positioning can be performed, for example, when removing a magnetic tape cartridge from the video recorder.

The above mentioned rotatable member is controllably driven by motor means responsive to a control signal produced by a special optical control system. In accordance with the invention, the optical control system includes an optical disc that is rotatable in correspondence with the rotatable member, means for directing a beam of light at the optical disc such that the beam is transmitted by the disc in accordance with it angular position, and photodetector means responsive to the transmitted beam for producing the control signal for coupling to the motor means.

The optical control system of the present invention is especially adapted for use with a transducer positioning apparatus wherein the transducer head is positioned by a lead screw that is controllably rotated by a geneva mechanism. The geneva mechanism includes a geneva wheel that rotates in correspondance with the lead screw, and a geneva driver that is driven by the motor means and that is also coupled to the optical disc. Each revolution of the geneva driver functions to rotate the geneva wheel by a prescribed angle and thereby index the transducer head by one track spacing.

More specifically, the optical disc is esssentially transparent and has formed thereon one revolution of an opaque spiral strip, and the photodetector means comprises a pair of photodetectors positioned to receive light that is not intercepted by the opaque strip. The outputs of the two photodetectors are applied to the positive and negative input terminals of a conventional differential amplifier,

to produce an error signal that varies linearly with the angular position of the optical disc. This error signal is suitably amplified to produce the control signal for driving the motor means, whereby the geneva driver is automatically rotated such that its pin is positioned away from the geneva wheel and the wheel is locked in position. When it is desired to index the transducer head from one recording track to another, an index pulse signal is applied to either the positive or negative input terminal of the differential amplifier, overriding the respective signals from the two photodetectors, and driving the motor means in appropriate direction.

In accordance with another aspect of the present invention, the optical disc further includes a second track for producing an engagement pulse signal whenever the pin of the geneva driver is engaged in a slot in the geneva wheel. When indexing the transducer head from one recording track to another, the index pulse signal is automatically terminated within a prescribed time after it is determined, by monitoring the engagement pulse signal, that the geneva driver pin has just become disengaged from a slot in the geneva wheel. The aforementioned servo apparatus thereafter operates to controllably position the geneva driver pin away from the geneva wheel.

In still another aspect of the present invention, power being supplied to the motor means is automatically interrupted whenever it is determined that the geneva driver pin has not yet engaged or has remained engaged in a slot in the geneva wheel after more than a prescribed time duration. This prevents possible demage to the motor means if the geneva mechanism ever becomes improperly jammed. Additionally, power to the motor means is interrupted after a prescribed settling time has elapsed following termination of an index pulse signal, thereby reducing the average power requirements of the apparatus.

Many other aspects and advantages of the present invention will become apparent from the following description of an advantageous embodiment, taken in conjunction with the accompanying drawings, which disclose, by way of example, the principles of the invention.

Brief description of the drawings

Fig. 1 is a top plan view of an apparatus for positioning a transducer head in a prescribed relationship relative to a selected track on a recording tape;

Fig. 2 is a side sectional view of the transducer positioning apparatus, taken substantially along the line 2-2 in Fig. 1;

Fig. 3 is a detailed sectional view of the optical disc and photodetector portion of the apparatus of Fig. 1;

Fig. 4 is an enlarged, detailed bottom plan view of the geneva mechanism for rotating the lead screw of the apparatus of Fig. 1;

Fig. 5 is an elongated, exploded perspective view of the optical disc and associated LED's and photodetectors of the apparatus of Fig. 1;

Fig. 6 is a plan view of the optical disc of Fig. 5;

Fig. 7 is a simplified block diagram of the optical control system for controllably rotating the lead screw to position the transducer head in the prescribed position relative to the selected track;

Fig. 8 is a diagram showing the connection between the output signal of the differential amplifier and the angular position of the optical disc; and

Fig. 9 is a timing diagram illustrating the step forward and engagement pulse signals that are utilized in the optical control system of Fig. 7 and diagram of Fig. 8.

Description of the embodiment in the drawing

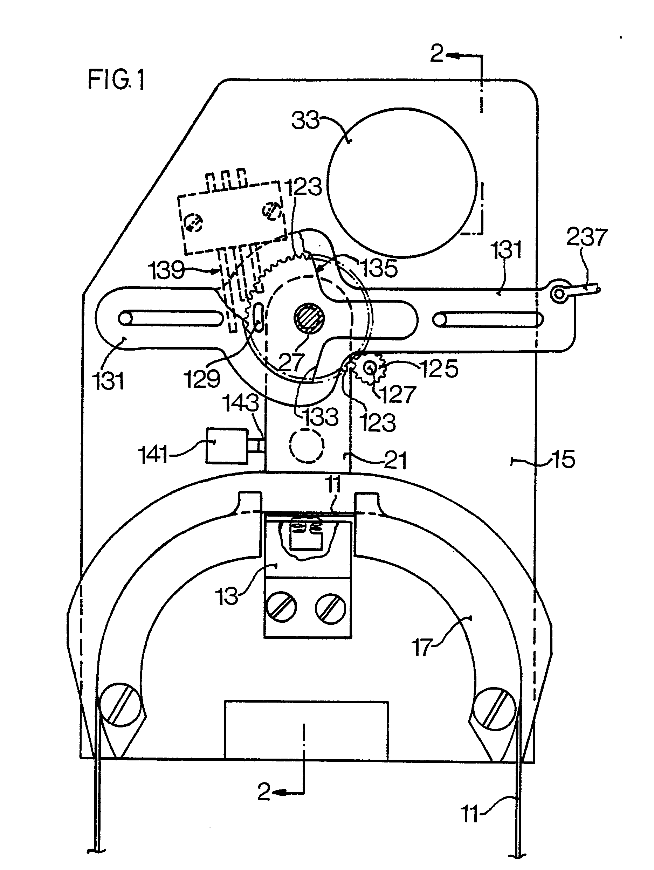

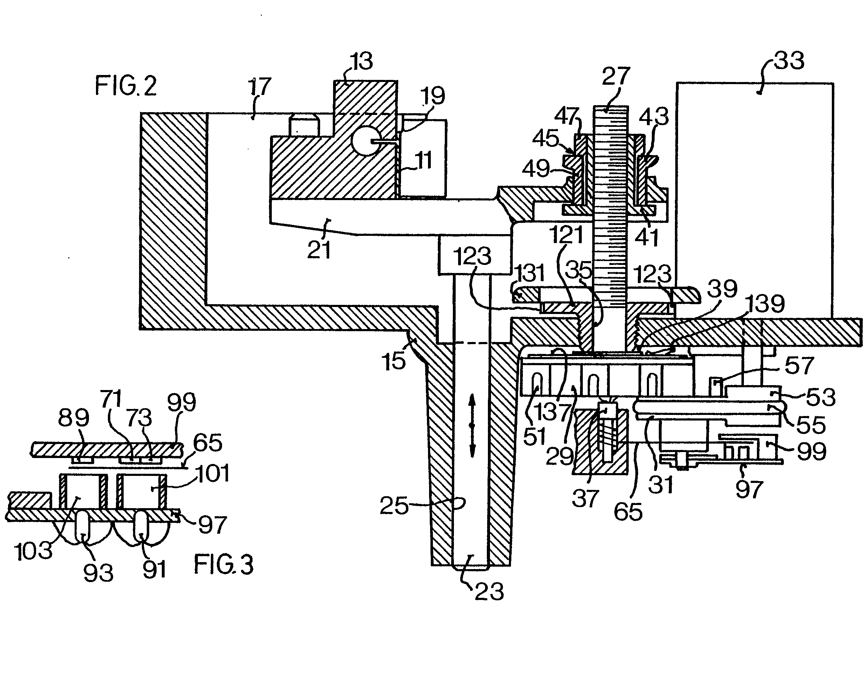

Referring now to the drawings, and particularly to Figs. 1 and 2, there is shown a transducer positioning apparatus being controlled by an optical control system constructed as described below. The apparatus is used for example with a longitudinal video tape recorder in which a magnetic tape 11 having a plurality of parallel and in particular equally-spaced recording tracks is driven past a magnetic tranducer head 13.

The transducer positioning apparatus includes a frame 15 that is fixed in relationship to the recorder chassis (not shown) and that includes an upstanding portion 17 having a guide 19 in the form of a shallow through for directing the tape along a horizontal path past the transducer head 13. The transducer head 13 is supported on a horizontally-disposed support bracket 21 that is movable along a vertical axis to position the head ajacent to a selected track on the tape 11. The support bracket 21 is guided along the vertical axis by an integral shaft 23 that is slidably received in a bore 25 formed in a portion of the apparatus frame 15. It will be understood that references made herein to directional orientations are made solely for purposes of explanation and are not to be construed as limitations of the invention.

0021326

In accordance with the invention, the support bracket 21, and thus the transducer head 13, are controllably movable along a vertical axis by means of a lead screw 27 mounted for rotation on the frame 15, thereby controllably positioning the transducer head in the prescribed relationship relative to the selected recording track. Additionally, the angular position of the lead screw 27 is precisely controlled by a geneva mechanism that includes a geneva wheel 29 coupled to the lead screw 27 and a geneva driver 31 that is driven by a reversible d-c motor 33. Each revolution of the geneva driver 31 functions to rotate the geneva wheel 29, and thus the lead screw 27, by a prescribed angular amount, thereby indexing the transducer head 13 by a distance equal to one track spacing.

As shown in Fig. 2, the lead screw 27 is journaled in a thrust bushing 35 that is threadedly secured to the apparatus frame 15. The lead screw 27 is restrained from axial movement relative to the bushing 35 by means of spring--biased plunger 37 mounted on the frame. The plunger 37 abuts one end of the lead screw 27 and urges an outwardly--projecting shoulder 39 on the lead screw 27 into abutment with one end of the thrust bushing 35.

The lead screw 27 is fixedly secured to the support bracket 21 by a special assembly that includes a lead screw follower nut 41, a spacer bushing 43, a wave spring washer 45, and a nut 47. The follower nut 41 is threadedly secured to the lead screw 27 at a convenient location thereon, and the spacer bushing 43, which has external threads formed therein, is threadly secured to a threaded bore 49 in the support bracket 21. The follower nut 41 and lead screw 27 are disposed within the central opening in the spacer bushing 43 and secured thereto by the wave spring washer 45 and the nut 47, which threadedly engages

0021326

an externally-threaded portion of the follower nut 41. It will be noted that the follower nut 41 fits relatively loosely in the central opening of the spacer bushing 43, to accommodate manufacturing tolerances in the apparatus- but the two elements nevertheless are fixed securely to each other by means of the nut 47.

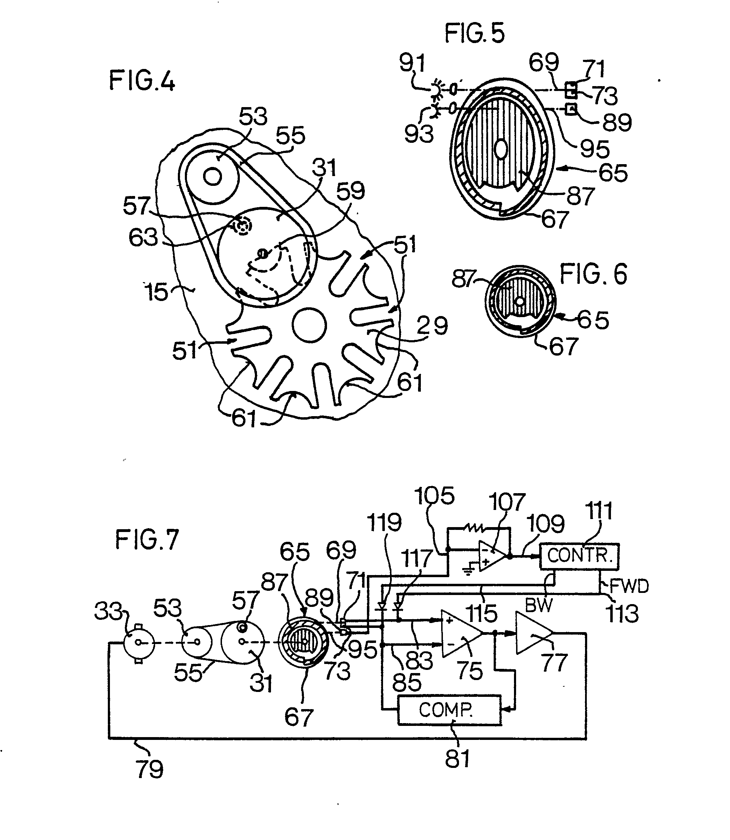

As shown in Fig. 4, the geneva wheel 29 includes eight uniformly-spaced and radially-aligned slots 51, and the d-c motor 33 is coupled to the geneva driver 31 by means of a pulley 53 and an O-ring belt 55. The geneva driver 31 is disc-shaped and includes a pin 57 that projects upwardly from an off-center location thereon and that is engagable with the spaced slots 51 formed in the geneva wheel 29. Each complete revolution of the geneva driver 31 functions to rotate the geneva wheel 29, and thus the lead screw 27, advantageously through one-eighth of a revolution, i.e., 45 degrees.

When the pin 57 of the geneva driver 31 is positioned away from the geneva wheel 29, the wheel 29 is prevented from rotating by an upstanding convex shoulder or cam 59 that is disposed near the center of the geneva driver 31 and that engages one of a plurality of corresponding concave cam surfaces 61 located between each of the spaced slots 51 in the geneva wheel 29. Additionally, the geneva driver pin 57 has a rotatable bushing 63 surrounding it to reduce the effects of wear, from repeated engagement with the spaced slots 51.

As shown in Fig. 7, the apparatus further includes an optical servo mechanism for automatically positioning the pin 57 of the geneva driver 31 at a location diametrically away from the geneva wheel 29, thereby locking the wheel 29, and thus the transducer head 13, in their respective posi-

0021326

tions. The servo includes the reversible d-c motor 33 for rotating the geneva driver 31 via the pulley 53 and the O-ring belt 55, along with an optical disc 65 that is coupled to the geneva driver 31 and that is rotated in correspondence therewith. The disc 65 includes an outer track 67 in the form of a spiral-shaped strip of opaque material, for selectively blocking transmission of a beam of light 69, in accordance with the angular position of the disc 65. The servo further includes a pair of photodetectors 71 and 73 for receiving the transmitted beam, and an associated differential amplifier 75 for producing an error signal indicative of the angular position of the optical disc 65. Finally, the servo includes a driver 77 for amplifying the error signal to produce a motor drive signal for coupling over line 79 to the d-c motor 33, to appropriately drive the geneva driver 31 to tis prescribed position. The servo is compensated in a conventional manner by a phase and amplitude compensation network 81, coupled between the output terminal and inverting input terminal of the differential amplifier 75.

The two photodetectors 71 and 73 are positioned to receive portions of the beam of light 69 that are not blocked by the spiral track 67 on the optical disc 65, and the resultant electrical current output signals of the two photodetectors 71 and 73 are coupled over lines 83 and 85 to the respective non-inverting and inverting input terminals of the differential amplifier 75. The resulting error signal produced by the differential amplifier, which is substantially proportional to the difference between the two current signals, varies substantially linearly with the angular position of the geneva driver 31, intersecting a zero-volt threshold at an angular position wherein the pin 57 of the geneva driver 31 is positioned diametrically away from the geneva wheel 29.

0021326

As shown in Fig. 5, the optical disc 65 includes two tracks, the outer, spiral track 67, associated with the two photodetectors 71 and 73 for producing the aforementioned error signal, and an inner track 87 associated with a separate photodetector 89 for producing an engagement pulse signal indicating that the geneva driver pin 57 is engaged in a slot 51 in the geneva wheel 29. The outer and inner tracks are associated with separate light-emitting diodes (LED's) 91 and 93, respectively, for emitting beams of light 69 and 95 that are directed at the disc 65 and transmitted to the corresponding photodetector(s) in accordance with special opaque patterns that form the two tracks.

As shown in Fig. 3, the LED's 91 and 93 and the photodetectors 71, 73 and 89 are mounted on printed circuit boards 97 and 99, respectively, that are positioned on opposite sides of the optical disc 65. Additionally, special cylindrical elements 101 and 103 are secured to the printed circuit board 97 to direct the respective beams of light 69 and 95 only at the appropriate photodetectors.

As best observed in Fig. 6, which is a plan view of the optical disc 65, the outer track 67 comprises one revolution of a spiral strip of opaque material, with the spiral arranged such that whenever its mid-point is positioned adjacent the two photodetectors 71 and 73, the geneva driver pin 57 is automatically positioned diametrically away from the geneva wheel 29. Also, the spiral is sized such that when its mid-point is disposed adjacent the two photodetectors, photodetectors are illuminated equally by portions of the beam of light 69 directed past the sides of the spiral. When the disc 65 is in this nominal position, the electrical currents generated by the two photodetectors 71 and 73 are substantially equal in magnitude and the error signal produced by the differential amplifier 75

0021326

is essentially zero. As a result, the d-c motor 33 is not driven in either direction, and the geneva wheel 29, and thus the transducer head 13, are locked in their respective positions.

If the optical disc 65 happens to be rotated in a clockwise direction from this nominal position, however, the radius of the portion of the spiral track 67 disposed in front of the two photodetectors 71 and 73 decreases, and, as a consequence, the photodetector 71 is illuminated by a greater amount than the photodetector 73 and the error signal will be correspondingly positive. This positive error signal is amplified in the driver 77 and coupled over line 79 to the d-c motor 33, which responds by driving the pulley 53 and, in turn, the geneva driver 31 in a counterclockwise direction, to restore the optical disc 65 to its nominal position. Similarly, if the disc 65 happens to be rotated in a counterclockwise direction from the nominal position, the radius of the spiral segment disposed directly in front of the two photodetectors 71 and 73 is larger and the photodetector 71 is illuminated by a lesser amount than the photodetector 73 and the error signal will be correspondingly negative. The negative error signal will therefore result in the geneva driver 31 being driven in a clockwise direction, to restore the optical disc 65 to its nominal position.

The inner track 87 on the optical disc 65 is opaque over most of its circumference, transmitting light to its associated photodetector 89 over an arc of only about 90 degrees, centered at a circumferential location on the disc 65 diametrically opposed to that of the mid-point of the outer, spiral track 67. This transparent region corresponds to the engagement of the geneva driver pin 57 in one of the slots 51 in the geneva wheel 29.

An electrical current signal produced by the photodetector 89 for the inner track 87 is transmitted over line 105 to an amplifier 107 to produce the aforementioned engagement pulse signal. This signal is coupled over line 109 from the amplifier to a controller 111 (Contr.), which produces step forward (FWD) and step backward (BW) control pulse signals for coupling over lines 113 and 115, respectively, to the differential amplifier 75, to move the transducer head 13 upwardly or downwardly, accordingly. These pulse signals (FWD and BW) are produced in accordance with instructions supplied to the controller 111 from, for example, a manually-actuated track selection switch (not shown) located on the video recorder, or circuitry (not shown) for detecting that the end of the tape 11 has been reached and that the transducer head 13 must be incremented to the next successive track.

The step forward (FWD) and step backward (BW) control pulse signals are coupled through diodes 117 and 119, respectively, to the non-inverting and inverting input terminals of the differential amplifier 75. The two signals are normally biased at voltages such that the two diodes 117 and 119 are reverse-biased, whereby they do not affect the coupling of current from the respective photodetectors 71 and 73 to the differential amplifier 75.

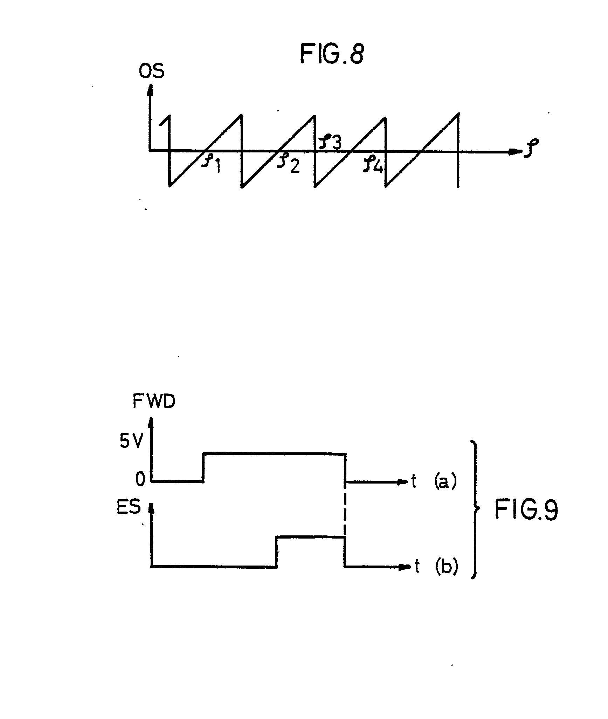

When the transducer head 13 is to be re-positioned at a new recording track, however, the voltage of the appropriate step forward or step backward control pulse signal is made sufficiently positive to forward-bias the corresponding diode 117 or 119, thereby overriding the current signal supplied by the corresponding photodetector 71 or 73 and driving the differential amplifier 75 into saturation. Thus, when a step forward pulse signal occurs, the differential amplifier 75 is saturated at a positive voltage, causing

the d-c motor 33 to move the geneva driver pin 57 in the appropriate angular direction to move the transducer head 13 forward to the next successive recording track. Conversely, when a step backward pulse signal occurs, the differential amplifier 75 is saturated at a negative voltage, causing the d-c motor 33 to rotate the geneva driver 31 in the opposite direction, to move the transducer head 13 back to the previous recording track. Fig. 8 shows the output signal (OS) of the differential amplifier 75 which causes the angular position $\mathcal{Y}$ of the optical disc 65. While in the positions $\mathcal{Y}_1$ and $\mathcal{Y}_2$ of the driver 31 the geneva driver pin 57 is positioned away from the geneva wheel 29 in the positions $\mathcal{Y}_3$ and $\mathcal{Y}_4$ the driver pin 57 is in its mid-point of engagement in the slots 51 of the geneva wheel 29.

The respective step forward (FWD) and step backward (BW) control pulse signals are terminated only when the controller 111 has determined, by monitoring the engagement pulse signal (ES in Fig. 9b) supplied on line 109, that the geneva driver pin 57 is no longer engaged in a slot 51 in the geneva wheel 29. Thereafter, the optical servo again functions in the abovedescribed manner to position the geneva driver pin 57 at the circumferential location diametrically opposed to the geneva wheel 29.

In practice, it has been determined that it normally requires approximately 30-35 milliseconds from the initiation of either a step forward or step backward pulse until the geneva driver pin 57 first engages a slot 51 in the geneva wheel 29, and that it normally requires an additional 10-15 milliseconds thereafter until the pin 57 has rotated the geneva wheel 29 by $\mathcal{Y}=45$ degrees and disengaged from the slot 51. Thus, each step forward or step backward control pulse normally has a duration of approximately 40-50 milliseconds. Additionally, it has been found that, after each

step forward or step backward control pulse has terminated, it normally requires approximately 40-60 milliseconds for the optical servo mechanism to re-position the geneva driver pin 57 at its stable location, diammetrically opposite the geneva wheel 29. Accordingly, additional step backward or step forward control pulses can be produced at that time, if it is desired to index the transducer head 13 still further.

To minimize the consumption of power in the servo mechanism, the supply of electrical current to the d-c motor 33 is interrupted after at least about 60 milliseconds have elapsed following termination of a step forward of step backward control pulse. Additionally, as a fail-safe procedure, power to the d-c motor is interrupted if, for any reason, it is determined by the controller 111 that the geneva driver pin 57 has not engaged a slot 51 in the geneva wheel 29 within approximately 100 milliseconds, or that the pin has remained engaged in a slot for a duration in excess of about 100 milliseconds. Such events will normally occur only if the geneva mechanism has become jammed in some manner, so this fail-safe procedure is included to prevent possible damage to the d-c motor 33.

With reference again to Figs. 1 and 2, and in accordance with another aspect of the present invention, the transducer positioning apparatus further includes fine adjustment means for controllably moving the lead screw 27 in a vertical or axial direction, to effect a fine adjustment of the position of the transducer head 13 relative to the selected track on the magnetic tape 11. This feature is particularly useful when the video recorder is being utilized to play back a magnetic tape 11 previously recorded on by another recorder.

More specifically, the thrust bushing 35, which journals
the lead screw 27, and against which the lead screw 27 is
spring-biased to prevent relative axial movement, can be
controllably rotated with respect to the frame 15, to move
the bushing 35, and thus the lead screw 27, in an axial
direction and thereby effect the  fine positioning of the
transducer head 13. The thrust bushing 35 includes a radially outwardly projecting flange 121 that includes a plurality of gear teeth 123 formed in its outer periphery, and the
bushing 35 can be rotated by means of a pinion gear 125
mounted on the frame 15 and engagable with the teeth 123 on
the flange 121. The pinion gear 125 can be controllably
rotated using a screw driver to engage a conventional
slot 127 formed in its exposed surface.

The fine adjustment means further includes a tab 129 projecting upwardly from a portion of the flange 121 of the
thrust bushing 35, along with a lever 131 that is slidably
mounted to the frame 15 and that has a pair of linear cam
surfaces 133 and 135 for selectively engaging the tab 129.
Thus, whenever the thrust bushing 35 has been rotated to
adjust the position of the transducer head 13, thereby
rotating the tab 129 away from its nominal position
(Fig. 1), the tab 129 can be returned to such position by
sliding the lever 131 until the tab 129 is engaged by one
of the cam surfaces 133 and 135. This lever 131 can be conveniently actuated by suitable linkage, a portion of which
is shown at 237, that is actuated, for example, whenever
a magnetic tape cassette (not shown) is removed from the
video recorder.

The transducer positioning apparatus further includes a
conventional disc-shaped commutator 137 secured to one surface of the geneva wheel 29 and rotatable in correspondence
therewith. Also, the apparatus includes a set of contact

brushes 139 for contacting the commutator disc 137 to monitor the angular position of the wheel 29, and thus the lead screw 27. Additionally, the apparatus includes a limit switch 141 that is mounted on the frame 15 and that is engaged by a tab 143 projecting laterally from the transducer head support bracket 21. This switch 141 is utilized to sense when the transducer head 13 is positioned at either the uppermost or lowermost track on the magnetic tape 11. Control circuitry (not shown) is included to insure that the controller 111 (Fig. 7) does not produce either a step forward or step backward control pulse signal to move the transducer head 13 beyond such locations.

From the foregoing description, it should be apparent that the present invention provides an effective mechanism for accurately positioning a transducer head in a prescribed relationship relative to a selected track of a plurality of parallel tracks on a recording medium. The head is positioned by a lead screw that is controllably rotated through a precise angle by a geneva mechanism, thereby avoiding the need for a relatively costly rotatable cam.

From the foregoing description, it should be further apparent that the present invention provides an optical control system for effectively controlling the above-described transducer positioning mechanism. The control system includes means for generating control pulse signals to index the transducer head from one track to another, along with a servo mechanism for positioning the pin of the geneva driver away from the geneva wheel, to lock the wheel, and thus the transducer head, in their respective positions.

0021326

While a particular form of the invention has been illustrated and described, it will be understood by one of ordinary skill in the art that various modifications can be made, without departing from the spirit and scope of the invention. Accordingly, it is not intended that the invention be limited, except as by the appended claims.

## Claims

1. Apparatus for positioning a transducer head (13) in a prescribed relationship relative to a selected track on a recording medium (11) carrying a plurality of tracks arranged in spaced parallel relationship, said apparatus comprising: a frame (15); a rotatable member mounted for rotation on said frame (15); means (21) for supporting said transducer head (13), said means (21) being threadedly coupled to said rotatable member; and means for controlling rotation of said rotatable member in a prescribed fashion, to position said transducer head (13) in the prescribed relationship relative to the selected track on the recording medium (11), characterized in that said rotatable member is a lead screw (27) and said means for controlling rotation comprises a geneva wheel (29) which is coupled to said lead screw (27), for rotation therewith, and a geneva driver (31), engagable with said geneva wheel (29), for controllably rotating said geneva wheel (29) and said lead screw (27) in the prescribed fashion to controllably move said transducer support means (21).

2. Apparatus as defined in claim 1, characterized in that said geneva wheel (29) includes eight equally-spaced and radially-aligned slots (51) formed therein, whereby each revolution of said geneva driver (31) functions to rotate the geneva wheel (29) by 45 degrees.

3. Apparatus as defined in claim 2, characterized in that each revolution of the geneva driver (31) results in the transducer head (13) being moved a distance equal to one track spacing.

4. Apparatus as defined in claim 1, characterized in that said apparatus further includes means for sensing whenever the transducer head (13) is in a prescribed relationship relative either the uppermost or lowermost one of the plurality of tracks, and for preventing the transducer head from being moved therebeyond.

5. Apparatus as defined in claims 1 to 4, characterized by fine adjustment means for controllably moving the lead screw (27) in an axial direction, to effect a fine adjustment of the position of the transducer head (13) relative to the selected track on the recording medium.

6. Apparatus as defined in claim 5, characterized in that said fine adjustment means comprises: a rotatable device (35) having external threads formed therein; and means defining a threaded bore in said frame for threadedly receiving said rotatable device; wherein said rotatable device (35) is coupled to said lead screw (27) in such fashion that the lead screw (27) can be rotated with respect thereto but is prevented from movement axially with respect thereto; and wherein a controlled rotation of said rotatable device (35) effects a corresponding movement of the device (35) axially with respect to the frame (15), thereby correspondingly moving said lead screw (27) axially with respect to the frame (15) and effecting a fine positioning of the transducer head (13) relative to the selected track on the recording medium (11).

7. Apparatus as defined in claim 6, characterized in that said lead screw (27) is journaled in said rotatable device (35).

8.  Apparatus as defined in claim 7, characterized in that said lead screw (27) includes a radially-outwardly projecting shoulder (39); and said fine adjustment means further includes means (37) for biasing said shoulder (39) into abutment with said rotatable device (35).

9.  Apparatus as defined in claim 8, characterized in that said rotatable device (35) includes a plurality of gear teeth (123) formed on a peripheral surface thereof; and said fine adjustment means further includes a pinion gear (125) mounted on said frame (15) and engagable with the gear teeth (123) on said rotatable device (35), whereby a controlled rotation of said pinion gear (125) effects a corresponding rotation of said rotatable device (35).

10. Apparatus as defined in claim 6, characterized in that said fine adjustment means further includes: a tab (129) projecting outwardly from an off-center location on said rotatable device (35); and cam means (133, 135) selectively engagable with said tab (129) to re-position said rotatable device (35) to a prescribed, nominal position.

11. Apparatus as claimed in claims 6 to 10, characterized in that said fine adjustment means including a thrust bushing (35) for journaling said lead screw (27), said bushing (35) being threadly coupled to said frame (15), said lead screw (27) including an outwardly projecting shoulder (39) for compressive engagement with said bushing (35), means (37) for biasing the shoulder (39) of said lead screw (27) into compressive engagement with said thrust bushing (35), whereby said lead screw (27) is restrained from axial movement with respect thereto, said bushing (35) including a plurality of gear teeth (123) formed on a peripheral surface thereof, a pinion gear (129) mounted on said frame (15) and engagable with the gear teeth (123) on said bushing (35), whereby a controlled rotation of said pinion gear (129) effects a corresponding rotation of said bushing (35) with respect to the frame (15), and whereby said bushing (35) and said lead screw (27) are threadedly moved axially with respect to the frame (15) and a fine positioning of the transducer head (13) relative to the selected track is achieved, said thrust bushing (35) further including a tab (129) projecting outwardly from an off-center location thereon, and cam means (133, 135) selectively engagable with said tab (129) to re-position said bushing (35) to a prescribed, nominal position.

12. Apparatus as defined in claim 1, characterized by an optical control system comprising: an optical disc (65) coupled to said rotatable means (27) and rotatably movable in correspondence therewith; means (91, 93) for directing a beam of light at said optical disc (65), said beam of light being transmitted by said disc (65) in a prescribed fashion in accordance with the angular position thereof; photodetector means (71, 73, 89), responsive to the beam of light transmitted by said optical disc (65), for producing an error signal indicative of the angular position of said optical disc (65) and, correspondingly, the angular position of said rotatable means (27); and motor means (33) responsive to the error signal for controllably rotating said rotatable means 27), to position the transducer head (13) in the prescribed relationship relative to the selected track.

0021326

13. Apparatus as defined in claim 12, characterized in that said optical disc (65) includes a track (67) in the form of a spiral segment of a material opaque to said beam of light; and the error signal produced by said photodetector means (71, 73) varies substantially linearly with the angular position of said optical disc (65).

14. Apparatus as defined in claim 13, characterized in that said photodetector means includes: first and second photodetectors (71 and 73) disposed adjacent said optical disc (65) and positioned to receive portions of the beam of light transmitted by portions of the optical disc (65) on opposite sides of said spiral track (67), each of said first and second photodetectors (71 and 73) generating an electrical current signal proportional to the amount of light incident thereon; and differential amplifier means (75), responsive to the electrical current signal generated by said first and second photodetectors (71 and 73), for producing said error signal, said error signal being substantially proportional to the difference between said signals.

15. Apparatus as defined in claim 12, wherein: said control system further includes means (87, 89, 107, 111) for producing an index pulse signal having a prescribed time duration; and said motor means (33) is responsive to said index pulse signal to rotate said rotatable means (27), and thereby move the transducer head (13), by a prescribed amount.

16.   Apparatus as defined in claim 12, characterized by
      indexing means (87, 89, 107, 111) for producing an
      index pulse signal having a prescribed time duration,
      said signal being coupled to said motor means (33) to
      controllably rotate said rotating (31, 29) by a prescribed angular amount; control means (65) coupled to
      said rotating means (29) and rotatable in correspondence therewith, for producing an error signal representative of the angular position of said rotating
      means (29), said motor means (33) being responsive to
      the error signal, after said index pulse signal has
      terminated, to controllably position said rotating
      means (31, 29) such that the transducer head (13)is
      fixed in the prescribed relationship relative to the
      selected track on the recording medium (11).

17.   Apparatus as defined in claim 16, characterized in
      that, after said index pulse signal has terminated,
      said control means (15) and said motor means (33)
      cooperate to position the pin (57) of said geneva
      driver (31) away from said geneva wheel (29), thereby
      preventing rotation of said geneva wheel (29) and
      fixing the transducer head (13) in the prescribed
      relationship relative to the selected track on the
      recording medium (11).

18.   Apparatus as defined in claim 16, characterized in
      that said apparatus further includes means for
      sensing whenever the pin (57) of said geneva driver
      (31) is engaged in said geneva wheel (29) and for
      producing a corresponding engagement pulse signal (ES);
      and said indexing means (87, 89, 107, 111) is responsive to the engagement pulse signal and operates to
      terminate the index pulse signal within a prescribed
      time following termination of the engagement pulse
      signal.

19. Apparatus as defined in claim 18, characterized by further means, responsive to the index pulse signal and the engagement pulse signal, for disabling said motor means (33) if it is determined that the engagement pulse (ES) signal has not occurred within a first prescribed time duration following initiation of the index pulse signal has not terminated within a second prescribed time duration.

FIG.1

0021326

FIG.2

FIG.3

0050/033991/033992

FIG.5

FIG.4

FIG. 6

FIG.7

FIG.8

FIG.9

## DOCUMENTS CONSIDERED TO BE RELEVANT

| Category | Citation of document with indication, where appropriate, of relevant passages | Relevant to claim |
|---|---|---|
| D | US - A - 4 041 539 (GENERAL MOTORS CORP.)<br>* column 1, lines 25 to 37; column 3, lines 8 to 13; fig. 3 *<br>-- | 1 |
|  | DE - A - 2 120 383 (NEWELL INDUSTRIES INC.)<br>* claim 1; fig. 1 *<br>-- | 12 |
| D,A | US - A - 4 144 549 (BASF)<br>* abstract *<br>---- |  |

**CLASSIFICATION OF THE APPLICATION (Int. Cl.³)**

G 11 B    5/55

G 11 B    21/08

**TECHNICAL FIELDS SEARCHED (Int.Cl.³)**

G 11 B    5/00

G 11 B    21/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 11-09-1980 | LEITHÄUSER |

EPO Form 1503.1   06.78